# EUROPEAN PATENT APPLICATION

(11) **EP 1 729 309 A2**
(43) Date of publication of application: **06.12.2006**
(21) Application number: 06076096.4
(22) Date of filing: 23.05.2006
(51) Int. Cl.: H01F 7/16, H01F 7/08, G05D 16/20, F16K 31/06

(54) **Magnetic circuit design for linear actuator with small coil diameter**

(30) Priority: 03.06.2005 US 144356
(71) Applicant: Delphi Technologies, Inc., Troy, Michigan 48007 (US)
(72) Inventor: Carrillo, Conrado, Juarez, 32326 Chihuahua (MX); Lin, Yingjie, El Paso, TX 79912 (US)
(74) Representative: Denton, Michael John

(57) **Abstract**

A pressure control valve assembly (10) includes a linear actuator (12) portion and a hydraulic portion (14). The linear actuator (12) includes an improved plunger (72) that has an enlarged diameter portion (106_{OD}) near the secondary plate (80). The linear actuator (12) further includes a plunger-to-primary plate interface that has a double step (130, 132) magnetic configuration, which increases the force developed on the plunger (72).

## Description

### TECHNICAL FIELD

The invention relates generally to electromagnetic devices, and more particularly to an improved linear actuator for use, for example, in a valve assembly.

### BACKGROUND OF THE INVENTION

Automobiles equipped with automatic transmissions have become ubiquitous. A conventional automatic transmission includes a planetary gearset, a set of bands used to engage parts of the gearset, a set of wet-plate clutches to engage other parts of the gears, a hydraulic system for controlling the clutches and bands, and a transmission fluid pump. Numerous solenoid valves or actuators are used to control the flow of transmission fluid through the automatic transmission. More specifically, pressure control valves are used to modulate the fluid pressure provided to individual clutches within the transmission. Conventional design practice provides for the use of a spool type of valve assembly or a poppet type of valve assembly for these applications. Due to the robustness as to contamination, a poppet type of valve assembly may be preferred.

Known magnetic designs generally include a solenoid assembly having a spool supported between a primary plate and a secondary plate, a plunger disposed in a central bore of the spool, and a coil wound on the spool. When energized, the magnetic flux circulates in a flux path through the plunger, to the primary plate, through a frame to the secondary plate and back through the plunger.

As further background, the poppet type of valve assembly referred to above may be configured as a variable bleed solenoid (VBS) valve assembly. A VBS valve assembly is a current-controlled, electro-hydraulic actuator that provides an outlet pressure that corresponds to the input electrical current level applied to the valve assembly. A relatively constant supply pressure may be applied to the valve assembly through a supply port, which internally leads to a control port. The pressure level present on the control port (output) can be controlled by allowing the control port to bleed to a reservoir ("exhaust") through a variable orifice formed in the valve body. With this basic structure, a VBS valve assembly can regulate fluid line pressure on the control port from a maximum value to a minimum value, as seen by reference to published U.S. patent application, publication number US 2004/0045611 A1 entitled "LOW LEAK PRESSURE CONTROL ACTUATOR" to Avila.

Along its axial length the plunger of a valve assembly, such as illustrated in Avila, has a "straight" or uniform diameter, which presents a predetermined level of magnetic reluctance for an air gap between the plunger and the secondary plate. This in turn produces a corresponding predetermined magnetic force acting on the plunger.

An important aspect of performance, however, involves providing a design that is relatively small in size and weight, on the one hand, yet provides, on the other hand, an internal magnetic configuration that results in increased levels of magnetic force acting on the moving part―the plunger―for example to overcome an inlet or supply fluid pressure acting on a check ball or the like.

There is therefore a need for a linear actuator design that improves upon and overcomes one or more of the problems as set forth above.

### SUMMARY OF THE INVENTION

An object of the present invention is to solve one or more of the problems as set forth in the Background. One advantage of the present invention is that provides a linear actuator that is reduced in size while having the same performance levels (e.g., about the same level of magnetic force acting on the moving part, such as the plunger) compared to conventional approaches. The present invention provides a linear actuator design that includes an improved plunger configuration―one that reduces the magnetic reluctance in the air gap in the radial space between the plunger and the secondary plate. This magnetic circuit design provides a reduced size, for the same force, due to increased efficiency. Another aspect of the invention involves a double step geometry at the plunger/primary plate magnetic interface that in-effect increases the magnetic force acting on the plunger, as compared to similar designs for the same amp turns A-T through the energizing coil.

A linear actuator in accordance with the present invention includes a frame, a plunger reciprocably movable within the frame, and a solenoid assembly. The solenoid assembly is configured to move the plunger between at least first and second axially offset positions.

In a constructed embodiment, there are a plurality of intermediate axial positions based on the level of current through the coil.

The solenoid assembly includes a spool supported between a primary plate and a secondary plate. The spool includes an electromagnetic coil wound thereon for receiving electrical current and producing magnetic flux. The magnetic flux flows in a flux path extending through the secondary plate, the plunger, the primary plate, the frame and back through the secondary plate.

The plunger extends along a main axis and has a first axial end proximate or near the primary plate and an opposing second axial end proximate or near the secondary plate. The first axial end is generally cylindrical in shape and has a first diameter. This first diameter, in a constructed embodiment, extends at least the majority of the length of the plunger toward the second end. The second axial end is also generally cylindrical and has a second diameter that is larger than the first diameter. Enlarging the diameter of the second axial end increases the area in the air gap there, which decreases the magnetic reluctance, thus increasing the magnetic force acting on the plunger. The increase in the air gap area also reduces the variation of the force as a function of travel (during operation).

In another embodiment of the invention, the primary plate is generally annular and includes a first axial side facing the plunger. The primary plate includes a circular trough formed in the first axial side, which is defined by a first step and a second step disposed radially outwardly of the first step. The plunger includes an annular hub that is in registry with the circular trough. In this further embodiment, the flux path that extends from the plunger to and through the primary plate includes (i) a first subpath from the radially outermost part of annular hub through the first step and (ii) a second subpath from the radially innermost part of the annular hub through the second step. The double step configuration increases the amount of force acting on the plunger.

In another aspect of the present invention, a valve assembly is provided which employs one or more of the features set forth above for the linear actuator, and which may be used, for exemplary purposes only, as an automatic transmission pressure control valve assembly, an oil control valve assembly such as for a cam phaser or a fuel vapor control valve assembly such as a carbon canister purge valve assembly.

### BRIEF DESCRIPTION OF THE DRAWINGS

The present invention will now be described by way of example, with reference to the accompanying drawings:
Figure 1 is a cross-sectional view of a pressure control valve assembly in a deenergized condition, in accordance with one embodiment of the present invention.
Figure 2 is an enlarged cross-sectional view of a hydraulic portion of the valve assembly of Figure 1 in a partially energized condition, showing various fluid flows.
Figure 3 is an enlarged cross-sectional view of the hydraulic portion of Figure 2 in a fully deenergized condition, showing various fluid flows.
Figure 4 is an enlarged cross-sectional view of the hydraulic portion of Figure 2 in a fully energized condition, showing various fluid flows.
Figure 5 is an enlarged cross-sectional view of a plunger/primary plate interface showing a magnetic flux path across a double step configuration.
Figure 6 is a chart showing various force levels as a further function of plunger travel and A-T through the coil.

### DESCRIPTION OF THE PREFERRED EMBODIMENT

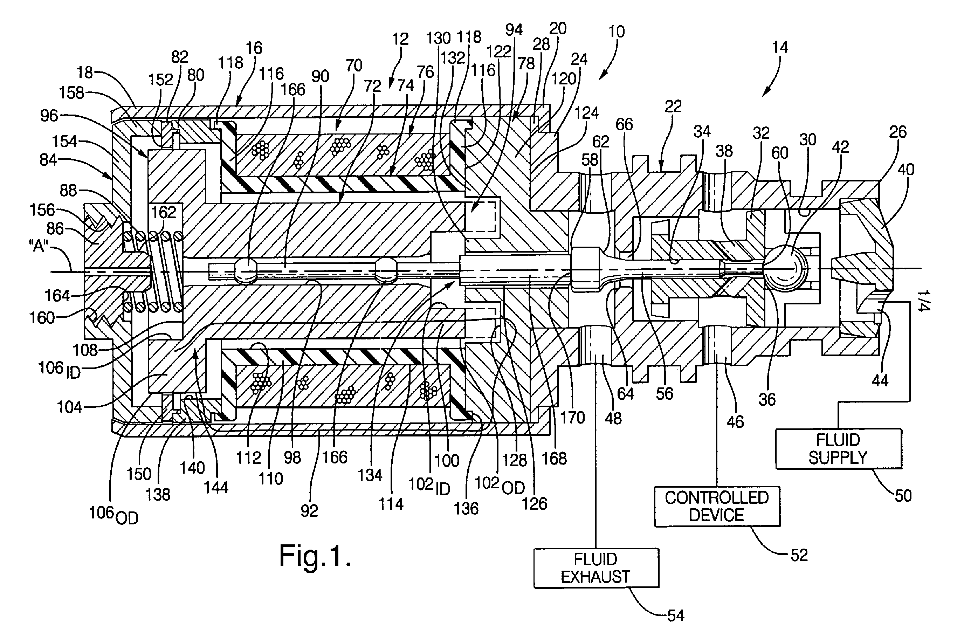

Referring now to the drawings wherein like reference numerals are used to identify identical components in the various views, Figure 1 is an enlarged cross-sectional view of an exemplary pressure control valve assembly 10 in accordance with the present invention, having a linear actuator portion 12 and a hydraulic portion 14. As shown, control valve assembly 10 extends a longitudinal axis, designated "A" in Figure 1. Control valve assembly 10 includes a hollow, generally cylindrical frame 16 having proximal end 18 and an open distal end 20 that is circumscribed by an internal lip. It should be understood that the terms proximal and distal, as used herein are taken with respect to the left end of pressure control valve assembly 10, as viewed in Figure 1, axially leftmost being "proximal" and axially rightmost being "distal." Control valve assembly 10 further includes, as part of hydraulic portion 14, a housing 22 that includes a proximal end 24 and a distal end 26. The proximal end 24 of housing 22 is circumscribed by a flange 28 that has an external, outside diameter approximately equal to the internal diameter of frame 16. Flange 28 of housing 22 abuts the internal lip of frame 16.

Housing 22 further includes a generally cylindrical, centrally disposed bore 30 formed therein which extends along the longitudinal axis "A." Bore 30 may include a relatively enlarged diameter first portion near distal end 26 that narrows as the bore 30 progresses toward the proximal end 24 of housing 22 to a second, reduced diameter portion.

Figure 1 further shows a valve assembly seat insert 32 disposed in central bore 30. Insert 32 has itself a central bore 34 surrounded by a check ball seat 36 on a distal end thereof, and as shown, a plurality of passages 38 extending diagonally from central bore 34 to an outer surface of insert 32.

End cap 40 is configured to close the enlarged opening (bore 30) of housing 22. End cap 40 includes an axially extending supply port 44 to be described in greater detail below.

Figure 1 further shows a check ball 42 that is slidably movable within insert 32 between a first seated position against check ball seat 36, and a second, unseated open position that is axially offset away from the first seated position. Insert 32 in this regard includes guiding features to guide the longitudinal movement of check ball 42. Check ball 42 is normally seated against check ball seat 36 when the valve assembly 10 is deenergized by virtue of the force arising from the fluid pressure of the fluid supply via inlet port 44, bearing against a distal surface of check ball 42. When the valve assembly 10 is energized, however, the check ball 42 is moved off of seat 36 due to the action of the linear actuator 12, thereby admitting fluid supplied through supply port 44 into and through passages 38.

It should be understood that Figure 1 shows a preferred, but nonlimiting, embodiment of pressure control valve assembly 10, for example, for use in an automotive automatic transmission. It should be understood, however, that other applications are possible and which fall within the spirit and scope of the invention, for example, use in an oil control valve assembly, such as a cam phaser valve assembly, or a use in fuel vapor control valve assembly, for example, a carbon canister purge valve assembly.

With continued attention to Figure 1, hydraulic portion 14 includes a supply port 44, a control port 46, and an exhaust port 48. The supply port 44, as illustrated, is formed in and extends axially through the end cap 40, which leads to the main housing bore 30. The control port 46, as illustrated, extends through and into the housing 22 in an annular fashion, through the passages 38 to the central bore 34 of insert 32 (collectively a "control chamber"). Exhaust port 48, as illustrated, may also be formed in housing 22 in an annular fashion. Exhaust port 48 is coupled to the control port (and vice versa) by way of a variable orifice 66 formed in housing 22. As shown, a fluid supply 50, *e.g*., a pump or the like, may be connected to the supply port 44. Moreover, a hydraulically controlled device 52, *e.g.,* a transmission clutch or band, may be connected to the control port 46. Also, a fluid exhaust 54, *e.g.,* a reservoir or sump, may be connected to the exhaust port 48.

Hydraulic portion 14 further includes a poppet or pin 56 slidably disposed within the central bore 34 of insert 32. Pin 56 includes a proximal end 58, a distal end 60 with a frusto-conical surface or seat 62 formed on an outer portion thereof. The surface 62 is configured in size and shape to engage a corresponding pin seat 64 when control valve assembly 10 is fully energized, as described in greater detail below. Pin seat 64 circumscribes variable orifice 66.

When control valve assembly 10 is fully deenergized, the pin 56 assumes the position shown in Figure 1 wherein the control port 46 is in full communication with the exhaust or bleed port 48 by way of the variable orifice 66. When the control valve assembly 10 is fully energized, the frusto-conical surface 62 fully engages seat 64, thereby closing the variable orifice 66, and cutting off the communication path it establishes between control port 46 and exhaust port 48. Accordingly, under the fully energized condition,the control port 46 is cut off from the exhaust port 48, and is fully in communication with the supply port 44, since the movement of the pin 56 to the seated position just described also dislodges the check ball 42 from check ball seat 36.

Pin 56 may assume a variety of intermediate positions between a fully open position for orifice 66, and a fully closed or sealed off position for orifice 66. The precise position of pin 56 (and thus the degree of fluid communication between the control port 46 and the exhaust port 48) corresponds to the level of current applied to the coil portion of the linear actuator 12, in a more or less substantially linear relationship (hence "linear actuator").

With continued reference to Figure 1, the linear actuator 12 includes a solenoid assembly 70 having a plunger 72, a spool 74, a coil 76, a primary plate 78 and a secondary plate 80. The linear actuator 12 further includes, as shown in Figure 1, a bushing 82, a collar 84, a screw 86, a spring 88 and a main rod 90.

Plunger 72 is reciprocably moveable within the frame 16 and has at least a first axial position when valve assembly 10 is completely deenergized and a second axial position when control valve assembly 10 is completely energized.

The solenoid assembly 70 is configured to move the plunger 72 from the first axial position referred to above, through a plurality of intermediate positions, to the second axial position referred to above. Movement of the plunger 72 is operative to alter the hydraulic portion 14, as described above.

The solenoid assembly 70 is generally configured to produce magnetic flux that flows in a flux path 92 extending through the secondary plate 80, the plunger 72, the primary plate 78, the frame 16 and back through the secondary plate 80. Accordingly, these components are preferably formed of ferromagnetic materials.

Plunger 72 extends along main axis "A" and has a first axial end 94 proximate the primary plate 78, a second axial end 96 proximate the secondary plate 80, and a central bore 98. Plunger 72 is generally cylindrical along its length. The first axial end 94 is generally cylindrical and includes a first annular hub 100 having a first outside diameter 102_{OD} and a first inside diameter 102_{ID}. The second axial end 96 of plunger 72 includes a second annular hub 104 having a second outside diameter designated 106_{OD} and a second inside diameter 106_{ID}. The configuration of plunger 72 is such that the second annular hub 104 defines a circular shaped land 108. As shown, the second outside diameter 106_{OD} is larger than the first outside diameter 102_{OD}. As will be described in greater detail below, the increased diameter 106_{OD} forming a generally T-shaped component in radial cross-section (shown in Figure 1) provides an increased area in the air gap (plunger-to-secondary plate). This increases the force produced and acting on the plunger.

Spool 74 is disposed within frame 16 and is configured to retain electromagnetic coil 76 and includes a main body 110 configured and arranged so as to defme an enlarged central bore 112. Spool 74 is arranged to include a winding bay 114 defined between axially opposing flanges 116. Spool 74 further includes a pair of lips 118 configured to fit into corresponding flanges on the primary and secondary plates 78, 80.

Electromagnetic coil 76 is shown as surrounding spool 74, particularly wound in the winding bay 114 thereof, in a generally toroidal shape. Coil 76 may be selectively, magnetically coupled to the plunger 72 when the coil is energized and deenergized, as described below by providing electrical current through the coil, as known in the art.

Primary plate 78 is generally annular in shape and includes a main body portion 120, a first axial side 122 facing plunger 72, a second, opposing axial side 124, a central bore 126, and a circular trough 128 formed in the first axial side 122. Trough 128 is defined by a first step 130 and a second step 132 that is disposed radially outwardly of the first step 130. The circular trough 128 and the central bore 126 together define a radially, inwardly disposed central hub 134. Primary plate 78 further includes a flange 136 configured to engage lip 118 of spool 74.

As shown, the hub 100 formed on the end of plunger 72 is in registry with the circular trough 128 of the primary plate. In the deenergized condition (as shown in Figure 1), the plunger end is nearly flush with the inner hub 134. In the energized condition *(i.e.,* plunger movement shown in dashed-line format), the plunger moves rightwardly so that the end hub 100 on plunger 72 enters the circular trough 128.

Secondary plate 80 is generally annular in shape and includes a main body portion 138, and an enlarged central bore 140 having a predetermined, inside diameter that is greater than the outside diameter 106_{OD} of the enlarged portion of plunger 72. The difference in diameter between the outside diameter of plunger 72 and the inside diameter of the secondary plate defines an air gap 144. As alluded to above, the air gap has an increased area, due to the increased outside diameter 106_{OD,} of the plunger 72 at its proximal end, relative to the diameter at the opposing end, 102_{OD}. The increased area provides for an increased force on plunger 72. Secondary plate 80 further includes a first flange configured to engage lip 118 of spool 74, and a second flange configured to engage a corresponding annular flange on bushing 82.

Bushing 82 is provided to guide the second axial end of plunger 72 as plunger 72 reciprocates in frame 16. Bushing 82 includes a main body portion and an enlarged central bore 152 configured in size to be slightly larger than the outside diameter of plunger 72.

Collar 84 provides an axial end closure function for the linear actuator 12 and includes a main base 154, which is disk-shaped. In base 154 there is a centrally-disposed, axially projecting hub, through which extends a threaded bore 156. Collar 84 further includes an annular flange 158, which extends in the opposite direction of the central hub of collar 84.

Screw 86 is configured to fill or close threaded bore 156, and also provides a mechanism for adjusting the force provided by spring 88 due to an amount of axial compression between screw 86 and plunger 72. Screw 86 includes outside threads configured to be in mesh with the corresponding threads 156 of collar 84. Screw 86 further includes a reduced diameter portion 162 that projects axially inwardly and is configured to have a diameter that is less than the inside diameter of compression spring 88. Projection 162 provides a suitable centering mechanism for spring 88. Screw 86 further includes a land 164.

Spring 88, as referred to above, provides an adjustable amount of force in an axial direction to plunger 72. The amount of force provided by bias spring 88 is selected to be less than the force needed to dislodge check ball 42, yet maintain main rod 90 in engagement with pin 56. The force on check ball 42 is a function of both the nominal inlet fluid pressure and the surface area of check ball 42 against which the supply fluid bears. Spring 88 is disposed between the land 108 of plunger 72 and the land 164 on screw 86.

Main rod 90 is secured to plunger 72 for movement therewith. Main rod 90 is configured, in general terms, to translate the movement of plunger 72 to pin 56 to adjust or alter the degree of opening of variable orifice 66. Main rod 90 includes a first main portion having a diameter that is less than that of central bore 98 of plunger 72, and at least one, and as shown in Figure 1, a pair of second, enlarged diameter portions 166 configured in size and shape in order to provide a press or interference fit between main rod 90 and the central bore 98 of plunger 72. Rod 90 further includes a third, enlarged diameter engagement portion 168 having an engagement surface 170 configured to engage a mating, corresponding surface 58 of pin 56.

As shown in the illustrated embodiment, plunger 72 is disposed, on one end, through the central bore of the secondary plate 80. The plunger 72 is supported, on its first axial end 94, by virtue of rod 90 being in sliding engagement with the through bore of the primary plate 78. The plunger 72 is supported on its second axial side 96, by virtue of the bushing 82. Accordingly, the plunger 72 is slidably disposed within the linear actuator 12 for axial reciprocation.

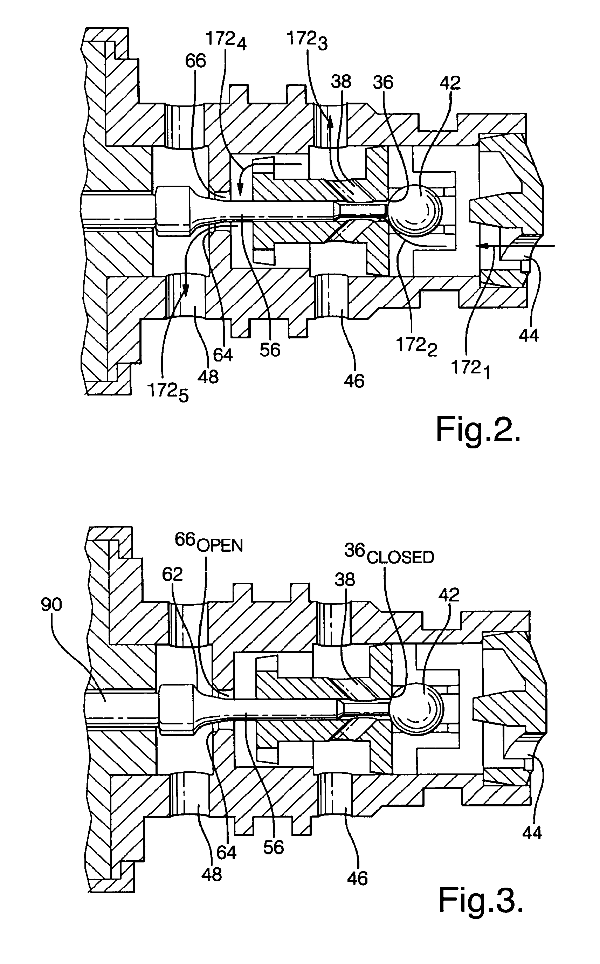

In general operation, and now referring to Figures 2-4, Figure 2 shows the general fluid flows that may be present in pressure control valve assembly 10. Figure 2 shows valve assembly 10 in a partially energized state. Supply fluid enters through supply port 44, as indicated by arrow 172₁. In the partially energized state, fluid flows around check ball 42 through the opening past check ball seat 36, as indicated by flow arrow 172₂. Fluid continues to flow through passages 38 filling the control chamber. Pressurized fluid may flow out of control port 46, as shown by fluid flow arrow 172₃. In the partially energized state, some of the fluid pressure is bled or exhausted to a fluid reservoir or exhaust via exhaust port 48. In this regard, fluid flows are shown at 172₄ and 172₅ which pass through variable orifice 66. By adjusting the amount of fluid exhausted, the fluid pressure provided to the control port 46 may be controlled.

Figure 3 shows valve assembly 10, particularly hydraulic portion 14, in a deenergized state. The inlet or opening to the control chamber is closed by check ball 42 being seated against check ball seat 36 as indicated at 36_{CLOSED}. The plunger 72 is in an axially withdrawn position wherein main rod 90 is in its most retracted position as well, and is shown as 90_{DEENERGIZED}. This maintains sealing surface 62 away from seat 64 of variable orifice 66, thereby leaving the variable orifice 66 completely open. Since the inlet fluid supply, via supply port 44, is substantially completely cut off from the control port 46, the control chamber (control port) will assume the same pressure as the exhaust, by virtue of complete fluid communication path therebetween. Accordingly, the control port 46 is essentially at the reservoir pressure *(i.e.,* depressurized).

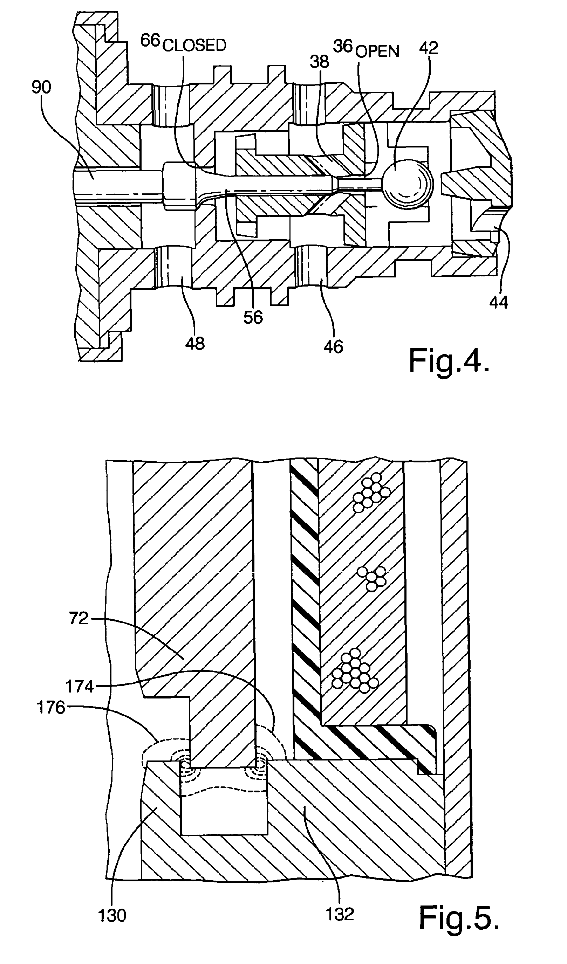

Figure 4 shows valve assembly 10 in a fully energized position wherein the plunger 72 is urged to its rightmost axial position (best shown in Figure 1 in dashed-line format). Since main rod 90 moves with plunger 72, rod 90 also assumes a fully extended position, shown in Figure 4 as 90_{ENERGIZED}. The pin 56 is also moved axially rightwardly so that surface 62 on pin 56 engages seat 64 to thereby close the variable orifice 66 completely, indicated at 66_{CLOSED}. The movement of pin 56 has the further effect of contacting and moving check ball 42 off check ball seat 36, thereby directly allowing open fluid communication between the supply port 44 and the control chamber (port 46). As shown in Figure 4, when fully energized and with orifice 66 fully closed, the control pressure at port 46 is substantially equal to the inlet supply pressure inasmuch as there is no bleeding or venting of the fluid pressure to exhaust by way of variable orifice 66. Intermediate positions of plunger 72 between deenergized and fully energized provide intermediate level of outlet/control pressure on port 46, due to the variable level of bleeding via exhaust port 48.

Features of the present invention involve improved performance and a reduced size package. To this end, referring again to Figure 1, one feature according to the present invention involves the enlarged annular hub 104 of the plunger 72 on the end that is situated near the secondary plate 80. As opposed to conventional plungers, which maintain a substantially uniform diameter plunger along its axial length, in accordance with the present invention, plunger 72 includes annular hub 104 with an increased outside diameter (i.e., relative to the main diameter of the plunger as it passes through the central bore of spool 74). In this regard, the magnetic design is such that the area of the air gap, now being based on a larger diameter, also increases. Since magnetic flux density corresponds to the ratio of amp turns (A-T) to area, and force is proportional to the magnetic flux density, it should be understood that the increase in the area of the air gap between the plunger and the secondary plate reduces the magnetic reluctance in the plunger-to-secondary plate air gap, thereby increasing the magnetic force. Accordingly, as the plunger 72 changes position along longitudinal axis "A," an overall force on the plunger can be maintained at a more constant level as a function of axial position. This reduction in variability relates to the overall increase in force as contributed by the enlarged section of plunger 72, which reduces the overall sensitivity as to position (travel).

Another feature of the present invention relates to the double step configuration at the plunger-to-primary plate interface.

Referring now to Figure 5, an enlarged view of the interface between the reduced diameter end of plunger 72 and the primary plate 78 is shown. In particular, where the flux path extends from the plunger to the primary plate, it does so through (i) a first subpath 174 from the plunger to first step 130, and (ii) through a second subpath 176 from plunger 72 through the second step 132. This double step magnetic design increases the area through which the flux flows, thereby increasing the force produced thereby acting on the plunger. Through the foregoing, an increase in magnetic force bearing on plunger 72 is established, thereby also increasing the performance while allowing for a reduced size package.

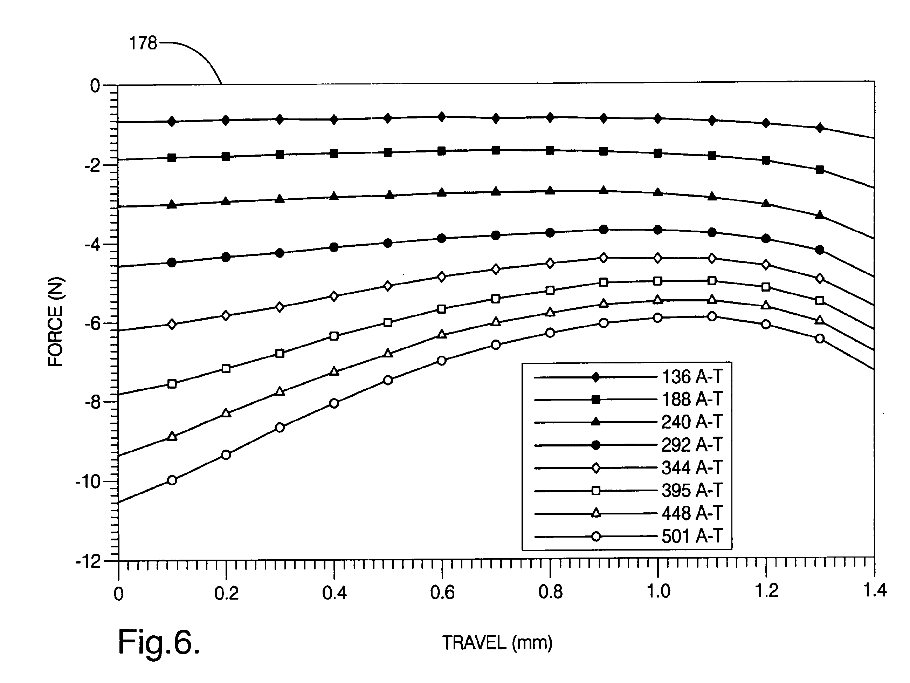

Figure 6 shows a force versus travel diagram, which illustrates the variation in force as the plunger 72 travels from a fully deenergized position (0 mm) to a fully energized position (e.g., 1.4 mm of travel in one embodiment). It may be observed that at higher amp turns (A-T), while the magnetic force increases generally, the linearity becomes more variable, due to various saturation points at various positions in the magnetic circuit of travel.

### EXAMPLE

In one embodiment, for plunger 72, the outside diameter 102_{OD} at the hub 100, which represents the main diameter of plunger 72, is 4.5 mm while the maximum diameter of the plunger, at hub 104, has an outside diameter 106_{OD} of 6.6 mm. The basic diameter of the magnetic package (i.e., the outside diameter of frame 16) is 20 mm while the length of the magnetic package (*i. e*.*,* linear actuator 12) is 29 mm. In this embodiment, a force of 0.84 N may be developed at 136 A-T through coil 76. Accordingly, a plunger ratio (i.e., ratio of 106_{OD} to 102_{OD}) may be between 1.4 and 1.5, more preferably between 1.46 and 1.47 and may be about 1.467 in one embodiment. An actuator ratio, defined between the diameter and length of the linear actuator 12, may be between about 1.4 and 1.5.

## Claims

1. A linear actuator (12) with a frame (16), a plunger (72) reciprocably movable within said frame (16) and having at least a first and a second axial position and a solenoid assembly (70) configured to move said plunger (72) between said at least first and second positions, said solenoid assembly (70) including a spool (74) supported between a primary plate (78) and a secondary plate (80), said spool (74) having an electromagnetic coil (76) wound thereon for receiving electrical current and producing magnetic flux wherein magnetic flux produced by said electrical coil flows in a primary magnetic flux flow path (92) extending through said secondary plate (80), said plunger (72), said primary plate (78), said frame (16) and back through said secondary plate (80); said plunger (72) extending along a main axis ("A") and having a first axial end (94) proximate said primary plate (78) and a second axial end (96) proximate said secondary plate (80), **characterized in that**:
said first axial end (94) being cylindrical and having a first diameter (102_{OD}), said second axial end (96) being cylindrical and having a second diameter (106_{OD}) greater than said first diameter (102_{OD}).

2. The linear actuator (12) of claim 1 wherein said secondary plate (80) is annular and includes a through bore (140) wherein said second axial end (96) of said plunger (72) is disposed in said through bore (140) of said secondary plate (80), said through bore (140) having a third diameter greater than said second diameter (106_{OD}) to thereby define a first air gap (144) between said plunger (72) and said secondary plate (80).

3. The linear actuator (12) of claim 2 wherein said primary plate (78) is generally annular and includes a first axial side (122) facing said plunger (72), said primary plate (78) including a circular trough (128) formed in said first axial side (122) defined by a first step (130) and a second step (132) disposed radially outwardly of said first step (130) wherein said primary magnetic flux flow path (92) extending from said plunger (72) through said primary plate (78) comprises (i) a first subpath (174) from said plunger (72) through said first step (130) and (ii) a second subpath (176) from said plunger (72) through said second step (132).

4. The linear actuator (12) of claim 3 wherein a plunger ratio between said second diameter (106_{OD}) and said first diameter (102_{OD}) is between about 1.4 and 1.5.

5. The linear actuator (12) of claim 4 wherein said ratio is between about 1.46 and 1.47.

6. The linear actuator (12) of claim 5 wherein said first diameter (102_{OD}) is about 4.5 mm and said second diameter (106_{OD}) is about 6.6 mm.

7. The linear actuator (12) of claim 3 wherein an actuator ratio of an outer diameter of the linear actuator to a length of the linear actuator (12) is between about 1.4 and 1.5.

8. The linear actuator (12) of claim 7 wherein said outer diameter is about 20 mm and said length is about 29 mm.

9. The linear actuator (12) of claim 3 further including a main rod (90) secured to said plunger (72) for movement therewith, said primary plate (78) including a central bore (126) configured to allow said main rod (90) to pass therethrough.

10. The linear actuator (12) of claim 1 wherein said plunger (72) extending along a main axis ("A") and having a first axial end (94) proximate said primary plate (78) and a second axial end (96) proximate said secondary plate (80), said primary plate (78) being generally annular and including a first axial side (122) facing said plunger (72), said primary plate (78) including a circular trough (128) formed in said first axial side (122) defined by a first step (130) and a second step (132) disposed radially outwardly of said first step (130) wherein said primary magnetic flux flow path (92) extending from said plunger (72) through said primary plate (78) comprises (i) a first subpath (174) from said plunger (72) through said first step (130) and (ii) a second subpath (176) from said plunger (72) through said second step (132).

11. The linear actuator (12) of claim 1 further comprising a hydraulic portion (14) having at least one controlled port (46), said plunger (72) being operable to control said controlled port (46).

12. The linear actuator (12) of claim 11 wherein said secondary plate (80) is annular and includes a through bore (140) wherein said second axial end (96) of said plunger (72) is disposed in said through bore (140) of said secondary plate (80), said through bore (140) having a third diameter greater than said second diameter (106_{OD}) to thereby define a first air gap (144) between said plunger (72) and said secondary plate (80).

13. The linear actuator (12) of claim 12 wherein said primary plate (78) is generally annular and includes a first axial side (122) facing said plunger (72), said primary plate (78) including a circular trough (128) formed in said first axial side (122) defined by a first step (130) and a second step (132) disposed radially outwardly of said first step (130) wherein said primary magnetic flux flow path (92) extending from said plunger (72) through said primary plate (78) comprises (i) a first subpath (174) from said plunger (72) through said first step (130) and (ii) a second subpath (176) from said plunger (72) through said second step (132).

14. The linear actuator (12) of claim 13 wherein a plunger ratio between said second diameter (106_{OD}) and said first diameter (102_{OD}) is between about 1.4 and 1.5.

15. The linear actuator (12) of claim 14 wherein said ratio is between about 1.46 and 1.47.

16. The linear actuator (12) of claim 15 wherein said first diameter (102_{OD}) is about 4.5 mm and said second diameter (106_{OD}) is about 6.6 mm.

17. The linear actuator (12) of claim 13 wherein an actuator ratio of an outer diameter of the linear actuator (12) to a length of the linear actuator (12) is between about 1.4 and 1.5.

18. The linear actuator (12) of claim 17 wherein said outer diameter is about 20 mm and said length is about 29 mm.

19. The linear actuator (12) of claim 13 further including a main rod (90) secured to said plunger (72) for movement therewith, said primary plate (78) including a passage (126) configured to allow said main rod (90) to pass therethrough.

20. The linear actuator (12) of claim 11 wherein said hydraulic portion is one of a pressure regulator assembly, a cam phaser assembly and a fuel vapor control valve assembly.

21. The linear actuator (12) of claim 20 wherein said hydraulic portion comprises said pressure regulator assembly (14), further including a main rod (90) secured to said plunger (72) for movement therewith, said primary plate (78) including a passage (126) configured to allow said main rod (90) to pass therethrough, said pressure regulator assembly (14) including a housing (122) having a supply port (44), a control port (46) and an exhaust port (48), said housing (22) having a first central bore (30);
an insert (32) disposed in said first central bore (30), said insert (32) having a second central bore (34) therethrough;
a pin (56) axially aligned with said main rod (90) and in engagement therewith, said pin (56) being disposed in said second central bore (34);
a check ball (42) in engagement with said pin (56);
wherein said insert (32) includes a supply opening surrounded by a check ball seat (36), said check ball (42) being configured to engage said seat to close said supply opening, wherein axial movement of said pin (56) is operative to dislodge said check ball (42) from said seat (36) to thereby admit supply fluid from said supply port (44) to said control port (46), and wherein said movement of said pin (56) is configured to vary fluid communication between said control port (46) and exhaust port (48) to thereby control a fluid pressure on said control port (46).
